# EUROPÄISCHE PATENTSCHRIFT

(11) **EP 2 793 211 B1**
(45) Veröffentlichungstag und Bekanntmachung des Hinweises auf die Patenterteilung: **21.12.2016**
(21) Anmeldenummer: 14165045.7
(22) Anmeldetag: 17.04.2014
(51) Int. Cl.: G09F 15/00, G09F 1/12, F16B 7/04

(54) **Profilverbinder**
Profile connector
Connecteur de profilés

(30) Priorität: 18.04.2013 DE 202013101665 U
(43) Veröffentlichungstag der Anmeldung: 22.10.2014
(73) Patentinhaber: SIGN-WARE GmbH & Co. KG, 59846 Sundern (DE)
(72) Erfinder: Vollmer, Gerd, 59846 Sundern (DE)
(74) Vertreter: Manske, Jörg

(56) Entgegenhaltungen:
- WO-A1-00/23676
- WO-A1-2005/028776
- DE-U1- 9 417 938
- DE-U1-202009 002 005
- DE-U1-202010 008 312
- US-A- 2 940 709
- US-A- 6 148 835

## Beschreibung

Die Erfindung betrifft einen Profilverbinder mit einem ersten Verbindungsarm, ausgerüstet mit einem Anschlussmittel zum Anschließen des ersten Verbindungsarms an ein erstes Profil mit einer seiner Längserstreckung folgenden Montagenut, in die das Anschlussmittel des ersten Verbindungsarms zum Anschließen desselben an das Profil eingreift, und mit einem zweiten Verbindungsarm, ausgerüstet mit einem Anschlussmittel zum Anschließen des zweiten Verbindungsarms an ein zweites Profil mit einer seiner Längserstreckung folgenden Montagenut, in die das Anschlussmittel des zweiten Verbindungsarms zum Anschließen desselben an das Profil eingreift, welche beiden Verbindungsarme in einer Ebene schwenkbar und zueinander einrichtbar sind, wobei der Profilverbinder einen weiteren Verbinder aufweist, der in derjenigen Ebene zwischen dem ersten und zweiten Verbindungsarm angeordnet ist, die entweder rechtwinklig zur Ebene der Verschwenkbarkeit des ersten und zweiten Verbindungsarms oder als Winkelhalbierende der geneigten Ebenen der Verschwenkbarkeit des ersten und zweiten Verbindungsarms liegt, welcher weitere Verbinder ein Anschlussmittel zum Anschließen dieses Verbinders an ein drittes Profil mit einer seiner Längserstreckung folgenden Montagenut, in die das Anschlussmittel eingreift, aufweist. Ferner betrifft die Erfindung eine Anordnung umfassend einen solchen Profilverbinder sowie daran angeschlossene Profile.

Zum Aufspannen von typischerweise auf einem flexiblen Kunststoffmaterial aufgebrachten Drucken - so genannten Prints - werden Rahmen eingesetzt. Diese verfügen jeweils über zumindest einen der Längserstreckung des Profils folgenden, nicht hinterschnittenen Flachkederkanal, der zur Aufnahme eines mit einem Flachkeder ausgerüsteten Randes eines solchen Prints gestaltet ist. Es versteht sich, dass derartige Prints nicht notwendigerweise auf einem Kunststoffmaterial aufgebracht sein müssen, sondern dass auch andere Printmaterialien für dieselben Zwecke eingesetzt werden können. Zur Ausbildung eines solchen Rahmens sind die aneinandergrenzenden Profile auf Gehrung geschnitten. Neben den Flachkederkanälen verfügen die Profile zudem in aller Regel über zumindest eine hinterschnittene Montagenut. Zum Festlegen zweier aneinandergrenzender Profile eines solchen Rahmens werden üblicherweise Eckverbinder eingesetzt. Bei derartigen Eckverbindern handelt es sich um ein Winkelstück, bei dem jeder Arm in die stirnseitig bezüglich des jeweiligen Profils offene Montagenut eingreift. Zum Festlegen dient zumeist eine die Nutöffnung durchgreifende Schraube, deren Gewindeschaft in den in der Montagenut befindlichen Arm des Eckverbinders eingreift. In Abhängigkeit des jeweils auszuführenden Winkels zweier aneinandergrenzender Profile werden Winkel entsprechende Winkelstücke benötigt.

Damit ein Print mit seinem umlaufenden Flachkederrand bestimmungsgemäß aufgespannt werden kann, müssen die Flachkederkanäle der Profile zumindest mit der dem Print näheren Nutenwandung in einer Eckausbildung aneinandergrenzen.

Aus dem Bereich der Sanitärinstallation ist aus DE 20 2004 017 022 U1 ein gelenkiger Profilverbinder bekannt. Bei diesem vorbekannten Profilverbinder sind die beiden Verbindungsarme in einer Ebene verschenkbar zueinander einrichtbar. Damit können mit einem solchen Profilverbinder innerhalb des möglichen Verschwenkbetrages beliebige Winkel zwischen den beiden Verbindungsarmen eingerichtet werden.

Zwar lassen sich mit den eingangs beschriebenen Profilverbindern Rahmen ausbilden. Jedoch können die aneinandergrenzenden Profile nur zweidimensional miteinander verbunden werden. Eine Erstellung von dreidimensionalen Körpern ist mit diesen vorbekannten Profilverbindern nicht möglich, insbesondere nicht mit der Maßgabe, dass im Falle eines Einsatzes von Profilen mit jeweils zumindest einem Flachkederkanal zum Aufspannen eines Print diese zumindest teilweise in einer Eckausbildung aneinandergrenzen.

Ein Profilverbinder mit den Merkmalen des Oberbegriffs des unabhängigen Anspruchs ist aus WO 2005/028776 A1 bekannt. Dieser vorbekannte Profilverbinder ist ausgelegt, um mit seinem ersten Verbindungsarm an ein erstes Profil und mit seinem zweiten Verbindungsarm an ein zweites Profil angeschlossen zu werden. Ein dritter Verbindungsarm erstreckt sich in Richtung einer Schwenkachse, an der die beiden Verbindungsarme zum Einrichten eines Winkels gegeneinander verschwenkt werden können und ist in einem Standpfosten festgesetzt. Zwar lassen sich aufgrund der Verschwenkbarkeit des ersten und zweiten Verbindungsarms mit diesem Profilverbinder dreidimensionale Körper erstellen, jedoch nicht mit der Maßgabe, dass ein Print auch in dem senkrecht stehenden Pfosten mit einem Flachkederkanal gehalten werden kann.

DE 94 17 938 U1 offenbart ein Hohlprofilelement sowie ein daraus aufgebautes Geländer. Dieses Hohlprofil dient nicht zum Aufspannen von Prints.

Weitere Profilverbinder sind aus WO 00/23676 A1 sowie US 6,148,835 bekannt. Letztere Dokumente beschreiben Rahmenkonstruktionen zum Aufbauen von Zelten.

Der Erfindung liegt daher die Aufgabe zu Grunde, einen eingangs genannten Profilverbinder dergestalt weiterzubilden, dass an diesen drei mit ihren Stirnseiten aneinandergrenzende Profile zusammengehalten werden können, wobei dieser Profilverbinder nicht nur zur Ausbildung unterschiedlicher, von den Profilen eingeschlossener Winkel einrichtbar sein soll, sondern vor allem auch geeignet sein soll, Profile miteinander zu verbinden, die einen Flachkederkanal zum Aufspannen eines Prints aufweisen und bei aneinandergrenzenden Profilen die Flachkederkanäle zu einer Eckausbildung sich ergänzen sollen.

Gelöst wird diese Aufgabe erfindungsgemäß durch einen eingangs genannten, gattungsgemäßen Profilverbinder, bei dem die Anschlussmittel des ersten und zweiten Verbindungsarms eine zur Anlage an der Außenseite des jeweiligen Profils gelangende Anschlussplatte umfassen, von der zumindest ein zum Eingreifen in die Montagenut vorgesehenes Anschlussglied zum formschlüssigen Anschließen des Profils an den jeweiligen Verbindungsarm abragend angeordnet ist, und dass die Ebene der Anschlussplatte gegenüber der Schwenkebene des ersten und zweiten Verbindungsarmes geneigt ist, wobei die Anschlussplatten gegensinnig zueinander geneigt sind.

Neben den beiden in einer ersten Ebene gegeneinander verschwenkbaren Verbindungsarmen verfügt dieser Profilverbinder über einen weiteren Verbinder, mit dem er an ein drittes Profil angeschlossen werden kann. Gemäß einem Ausführungsbeispiel ist dieser weitere Verbinder ebenfalls als Verbindungsarm ausgeführt. Dieser weitere Verbindungsarm - der dritte Verbindungsarm - ist gegenüber dem ersten und zweiten Verbindungsarm verschwenkbar. Die Ebene, in der der dritte Verbindungsarm gegenüber den beiden anderen Verbindungsarmen verschwenkt werden kann, verläuft rechtwinklig zur Ebene der Verschwenkbarkeit des ersten und zweiten Verbindungsarmes zueinander. Die Ebene der Verschwenkbarkeit des dritten Verbindungsarmes befindet sich innerhalb derjenigen Ebene, die von dem ersten und zweiten Verbindungsarm eingefasst ist und somit zwischen diesen beiden Verbindungsarmen liegt. Diese Ebene verläuft ebenfalls rechtwinklig zu derjenigen Ebene, in der der erste und zweite Verbindungsarm durch Verschwenken gegeneinander einrichtbar sind. Der dritte Verbindungsarm zeichnet sich vorzugsweise dadurch aus, dass dessen effektive Länge einrichtbar ist. Die effektive Länge bezieht sich in diesem Zusammenhang auf die Länge des Verbindungsarmes zwischen seiner gelenkigen Anbindung, durch die seine Verschwenkbarkeit erreicht wird, bis zum Anschluss an das dritte Profil.

Durch die Einrichtbarkeit des ersten und zweiten Verbindungsarmes und durch den zusätzlichen Verbinder lassen sich mit diesem Profilverbinder eine Vielzahl unterschiedlicher geometrischer Eckausbildungen realisieren. Infolgedessen können unter Verwendung derartiger Profilverbinder unterschiedlichste dreidimensionale Körper erstellt werden. Dieses gilt insbesondere für solche Profilverbinder, bei denen der dritte Verbinder ebenfalls als Verbindungsarm ausgelegt ist und dieser, wie in einem bevorzugten Ausführungsbeispiel vorgesehen, sich gegenüber den beiden anderen Verbindungsarmen zusätzlich in einer Ebene rechtwinklig zur Ebene der Verschwenkbarkeit des ersten und zweiten Verbindungsarmes einrichten lässt. Zum Zwecke der Ausbildung unterschiedlich geometrischer Eckausbildungen zwischen drei im Bereich ihrer Stirnseiten zusammengeführten Profilen, dient in besonderem Maße auch die hinsichtlich ihrer effektiven Länge vorgesehene Einrichtbarkeit des dritten Verbindungsarmes.

Der erste und zweite Verbindungsarm sind in einer Ebene verschwenkbar. Dieses umfasst Ausgestaltungen, in der die beiden Verbindungsarme in einer gemeinsamen Ebene verschwenkbar sind, ebenso wie solche, bei denen der erste und zweite Verbindungsarm jeweils auf einer eigenen Ebene verschwenkbar sind. Im letzteren Fall sind die Ebenen somit gegeneinander geneigt. Der erste und zweite Verbindungsarm kann um eine gemeinsame Schwenkachse verschwenkbar sein. Möglich ist auch eine Ausgestaltung, bei der die Schwenkachse des ersten Verbindungsarmes von der Schwenkachse des zweiten Verbindungsarmes beabstandet ist, wobei die Ebene, in der sich der dritte Verbinder befindet, zwischen diesen beiden Schwenkachsen angeordnet ist. Sind die Schwenkachsen dieser beiden Verbindungsarme voneinander beabstandet, können diese bezüglich ihrer Schwenkbewegung miteinander gekoppelt sein. Dieses gelingt gemäß einem Ausführungsbeispiel mit einer ineinander eingreifenden Verzahnung. Der Radius der Verzahnung ist vorzugsweise bei beiden Verbindungsarmen gleich, damit bei der Verstellung eines der beiden Verbindungsarme der jeweils andere Verbindungsarm in gleicher Weise mit verschwenkt wird. Hierdurch ist gewährleistet, dass sich die Ebene des dritten Verbinders in der Ebene der Winkelhalbierenden des durch die beiden Verbindungsarme eingeschlossenen Winkels befindet. Auf diese Weise lassen sich Winkel für eine vorgegebene Rahmenkonstruktion voreinstellen. Von Vorteil bei einer solche Ausführung ist auch, dass die Verbindungsarme im Bereich ihrer kinematischen Kopplung, also: im Bereich ihrer beispielhaft vorgesehenen Verzahnung miteinander, eine Winkelskala tragen können. Die Winkelskala kann einen bestimmten Winkel angeben, in Abhängigkeit von der Stellung der beiden Verbindungsarme zueinander. So kann eine solche Winkelskala beispielsweise den durch die Verbindungsarme eingeschlossenen Winkel angeben oder auch einen Winkel, den die Verbindungsarme gegenüber eine Stellung haben, wenn die Anschlussmittel der Verbindungsarme diametral voneinander wegweisend sind.

Typischerweise wird man einen solchen Profilverbinder dergestalt ausführen, dass die Anschlussmittel nach außen weisend angeordnet sind und somit der Profilverbinder innen liegend bezüglich der mit diesen zusammengehaltenen Profilen angeordnet ist. Dieses ermöglicht einen Einsatz des Profilverbinders zur Eckausbildung eines dreidimensionalen Rahmengebildes, bei dem die Profile an ihrer nach außen weisenden Seite Flachkederkanäle aufweisen. Daher ist es möglich, unter Verwendung dieser Profilverbinder dreidimensionale Rahmenkörper auszubilden, deren Seitenflächen durch einen einen Flachkederrand aufweisenden Print, die jeweils in einer Flachkedernut festgesetzt sind, gebildet sind.

Bei diesen Profilen sind die Flachkedernuten an der der jeweiligen Montagenut zum Anschließen eines Verbindungsarmes des Profilverbinders gegenüberliegenden Seite angeordnet.

Angeschlossen werden die in die Montagenuten eingreifenden Anschlussmittel der beiden Verbinderarme und des einen weiteren Verbinders, der ebenfalls als Verbindungsarm ausgestaltet sein kann, in der Montagenut vorzugsweise durch einen Reibschluss und somit durch einen Klemmung. Besonders bevorzugt ist eine solche Ausgestaltung, wenn die Montagenut jedes Profils, das mit einem solchen Profilverbinder zusammengehalten werden sollen, hinterschnitten ausgeführt ist. Dieses erlaubt einen Anschluss der Verbindungsarme an ein solches Profil mit einfachen Mitteln unter Ausnutzung des Hinterschnittes, um einen formschlüssigen Anschluss in Querrichtung zur Profillängserstreckung zu erzielen. Eine Festlegung kann von der Innenseite der Montagenut zu dem Boden derselben und dem oder den den Hinterschnitt erzeugenden Schenkeln erfolgen. Grundsätzlich ist eine Festlegung der Anschlussmittel in Längserstreckung der jeweiligen Montagenut der Profile ist nicht erforderlich, wenn die drei Verbindungsarme in der gewünschten Winkelstellung zueinander festgelegt sind. Gleichwohl wird man in aller Regel zum Beseitigen von vorhandenem Spiel das oder die Anschlussmittel eines jeden Verbindungsarmes an dem darin angeschlossenen Profil festlegen. Selbiges gilt umgekehrt auch für eine prinzipiell nicht notwendige Festlegung des zwischen den einzelnen Verbindungsarmen eingerichteten Winkels, wenn die Verbindungsarme mit ihren Anschlussmitteln an dem jeweiligen Profil festgelegt sind.

Der erste und zweite Verbindungsarm als Teil des jeweiligen Anschlussmittels tragen eine Anschlussplatte, die ein oder mehrere Anschlussglieder, vorgesehen zum Eingreifen in die Montagenut eines Profils, tragen. Bei einer Ausgestaltung, bei der die Montagenut eines solches Profils hinterschnitten ist, typischerweise nach Art eines Kederkanals, trägt solche Anschlussplatte vorzugsweise unterschiedliche Anschlussglieder. Eines dieser Anschlussglieder greift durch die Nutöffnung in den Hinterschnitt oder einen Teil desselben der Montagenut des Profils ein, während zumindest ein weiterer lediglich in die Nutöffnung hineinragt. Dabei ist vorgesehen, dass dieses weitere Anschlussglied die Funktion eines Riegels einnimmt, an der sich das in den Hinterschnitt eingreifende Anschlussglied zur Blockierung seiner Eingriffsstellung in den Hinterschnitt abstützt. Bei einer solchen Ausgestaltung ist zweckmäßigerweise vorgesehen, dass das in den Hinterschnitt eingreifende Anschlussglied lösbar an die Anschlussplatte angeschlossen ist. Dieses Anschlussglied kann, wenn von der Anschlussplatte gelöst, in die Nutöffnung eingesetzt und in diese hineingeschwenkt werden. Das zumindest eine weitere Anschlussglied dieses Anschlussmittels dient als Sicherung und braucht daher lediglich in die Nutöffnung hineinzuragen. Ein Anschlussmittel, wie dieses vorstehend beschrieben ist, ist mit größerem Detail als Profilnutanschlussverbinder in dem deutschen Gebrauchsmuster 20 2009 002 005 U1 beschrieben. Durch diese explizite Bezugnahme auf DE 20 2009 002 005 U1 wird der Offenbarungsgehalt dieses Gebrauchsmusters zum Gegenstand der Offenbarung dieser Ausführungen gemacht. Bezüglich weiterer Ausgestaltungen eines solchen Anschlussmittels ist daher auf DE 20 2009 002 005 U1 verwiesen.

In einer beispielhaften Ausführung ist die effektive Länge des dritten, als Verbindungsarm ausgeführten Verbinders einrichtbar. Gemäß einer Ausgestaltung verfügt der dritte Verbindungsarm über eine Hülse, in der ein Verlängerungsstück hinsichtlich seiner das Anschlussmittel tragenden Ende aufweisenden Länge einrichtbar und festlegbar ist. Bei dem Verlängerungsstück kann es sich um eine Stange oder ein Rohrstück handeln. Festgelegt wird ein solches Verlängerungsstück in der Hülse typischerweise durch eine den Mantel der Hülse durchgreifende Klemmschraube. Dabei kann bei hinreichender Stärke des die Hülse bildenden Materials das zum Antrieb der Klemmschraube notwendige Innengewinde in dieses Material eingebracht sein. Anderenfalls kann auf der Außenseite ein Mutterstück aufgesetzt sein.

Als Anschlussmittel kann dem Verlängerungsstück ein in der hinterschnittenen Montagenut des Profils angeordneter Verbinder vorgesehen sein, der an das Verlängerungsstück angeformt sein kann. Bei einem solchen Verbinder kann es sich um einen herkömmlichen, an sich bekannten Profilverbinder handeln, der bezüglich der Mittellängsebene der Montagenut beidseitig in den Hinterschnitt eingreift. Ein Einsetzen dieses Verbinders in die Montagenut erfolgt über ihre stirnseitige Öffnung.

Gemäß einer Ausgestaltung, bei der die Anschlussmittel eine Anschlussplatte umfassen, ist vorgesehen, dass diese gegenüber der Ebene der Verschwenkbarkeit des ersten und zweiten Verbindungsarmes geneigt sind, und zwar gegensinnig zueinander. Die Neigung ist vorgesehen, um bei einer Ausgestaltung, bei der der erste Verbindungsarm und zweite Verbindungsarm eine gemeinsame Schwenkachse aufweisen, das Gelenk, mit dem der erste Verbindungsarm an den zweiten Verbindungsarm angeschlossen ist, aus der Ebene der Montagenutöffnung herauszubringen. Bevorzugt ist des Weiteren, dass der erste und der zweite Verbindungsarm, die typischerweise spiegelsymmetrisch zueinander konzipiert sind, gewinkelt ausgeführt sind. Die Winkelausbildung dieser beiden Verbindungsarme ist voneinander wegweisend vorgesehen. Die auf Grund dieser Winkelausführung ausgestellten Abschnitte der beiden Verbindungsarme tragen das oder die Anschlussglieder. Bei einer solchen Ausgestaltung brauchen die beiden Verbindungsarme bei der Realisierung größerer Winkel, mit der die an diese Verbindungsarme angeschlossenen Profile aneinandergrenzen, nicht übermäßig gespreizt zu sein. Die Verschwenkbarkeit des ersten und zweiten Verbindungsarmes zueinander gewährleistet, dass durch die gewinkelte Ausführung derselben der Winkel, mit dem zwei von diesem Armen gehaltene Profile stirnseitig aneinandergrenzen, nicht durch den Winkel der Winkelausbildung begrenzt ist. Vielmehr erlaubt die Verschwenkbarkeit dieser beiden Verbindungsarme auch eine Anordnung derselben, bei der diese soweit gegeneinander verschwenkt sind, dass in Folge der Längsausrichtung des jeweiligen Anschlussmittels auch kleinere Winkel, mit den dem zwei Profile stirnseitig aneinandergrenzen, realisiert werden können.

Auch wenn mit derartigen Profilverbindern typischerweise Profile mit gleichem Profilquerschnitt miteinander verbunden werden, ist dieses nicht zwingend. Vielmehr können mit einem solchem Profilverbinder auch unterschiedliche Profile miteinander verbunden werden.

Typischerweise ist ein solcher Profilverbinder in seinen Einzelteilen materialeinheitlich hergestellt, beispielsweise aus einem Aluminiumwerkstoff. Ein Einsatz einer geeigneten Legierung zur Herstellung des Profilverbinders bzw. seiner Einzelteile ist aufgrund der besonderen Belastbarkeit eines solchen Materials bevorzugt. Dieses schließt jedoch eine Verwendung auch anderer Materialen, insbesondere von Kunststoffen, etwa auch von faserverstärkten Kunststoffen nicht aus.

Nachfolgend ist die Erfindung anhand von Ausführungsbeispielen unter Bezugnahme auf die beigefügten Figuren beschrieben. Es zeigen:
- **Fig. 1:**: eine Draufsicht auf einen Profilverbinder zum Verbinden von drei, jeweils eine Montagenut aufweisenden Profilen in einer ersten Anordnung seiner Verbindungsarme zueinander,
- **Fig. 2:**: eine Draufsicht auf die Rückseite des Profilverbinders der Figur 1,
- **Fig. 3:**: eine Frontseitenansicht des Profilverbinders der Figuren 1 und 2,
- **Fig. 4:**: eine Seitenansicht des Profilverbinders der Figuren 1 bis 3,
- **Fig. 5:**: eine Draufsicht auf den Profilverbinder der Figur 1 in einer anderen Anordnung seiner Verbindungsarme zueinander,
- **Fig. 6:**: der Profilverbinder der vorangegangenen Figuren mit jeweils einem an jeden Verbindungsarm angeschlossenen Profil in einer ersten perspektivischen Darstellung,
- **Fig. 7:**: die Profilanordnung mit dem Profilverbinder der Figur 6 aus einer anderen Perspektive,
- **Fig. 8:**: die Profilanordnung mit dem Profilverbinder der Figur 6 aus noch einer weiteren Perspektive,
- **Fig. 9:**: der Profilverbinder in einer anderen Anordnung seiner Verbindungsarme zueinander zum Verbinden von drei Profilen einer anderen geometrischen Anordnung zueinander,
- **Fig. 10:**: die Anordnung der Figur 9, dargestellt aus einer anderen perspektivischen Sicht,
- **Fig. 11:**: der Profilverbinder in noch einer anderen Anordnung seiner Verbindungsarme zueinander zum Verbinden von drei Profilen in noch einer anderen geometrischen Anordnung zueinander,
- **Fig. 12:**: die Anordnung der Figur 6 mit an die Profile angeschlossenen Prints in einer ersten perspektivischen Ansicht,
- **Fig. 13:**: die Anordnung der Figur 12 in einer weiteren perspektivischen Ansicht,
- **Fig. 14:**: eine Innenansicht auf die Anordnung der Figuren 12 und 13,
- **Fig. 15:**: eine perspektivische Ansicht eines Profilverbinders gemäß einer weiteren Ausgestaltung, angeschlossen an ein Profil,
- **Fig. 16:**: eine Draufsicht auf den Profilverbinder der Figur 15 und
- **Fig. 17:**: eine Seitenansicht des Profilverbinders der Figuren 15 und 16.

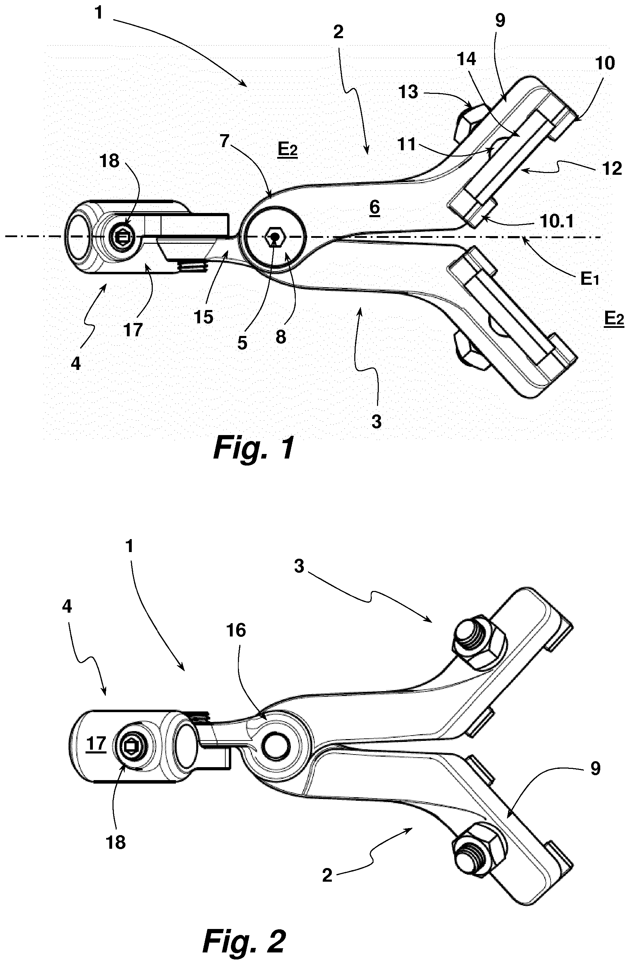

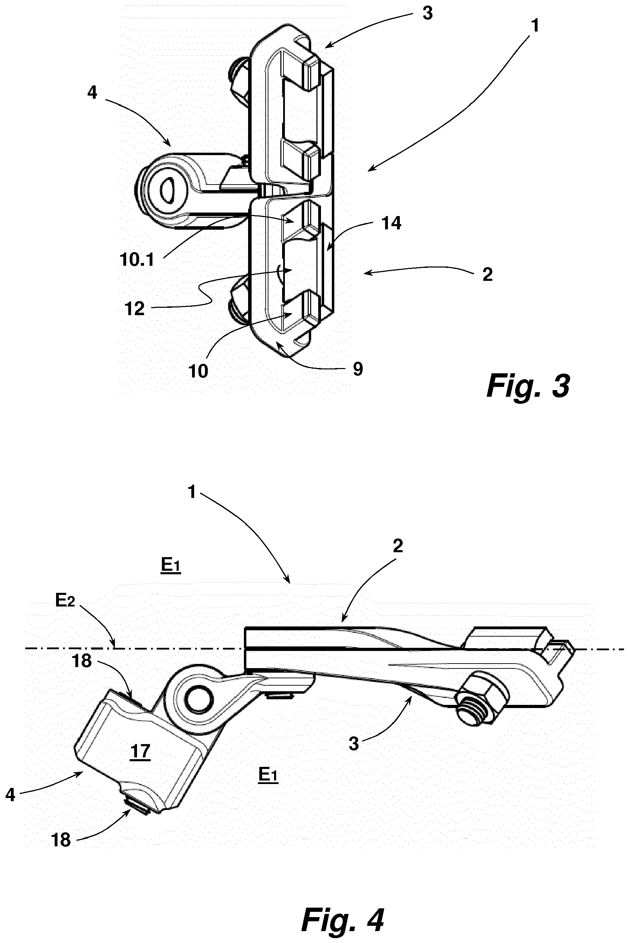

Ein Profilverbinder 1 verfügt über drei gelenkig zueinander angeordnete Verbindungsarme 2, 3, 4. Die Verbindungsarme 2, 3 sind spiegelsymmetrisch zu der rechtwinklig zur Papierebene verlaufenden Ebene E₁ ausgeführt. Die Ebene E₁ schneidet die Schwenkachse 5, um die die beiden Verbindungsarme 2, 3 in der Ebene E₂ verschwenkbar sind. In Figur 1 befindet sich die Ebene E₂ der Verschwenkbarkeit der beiden Verbindungsarme 2, 3 gegeneinander in der bzw. parallel zur Papierebene (siehe auch Figur 4). Wie aus den Figuren erkennbar, stellt die Schwenkachse 15 die gemeinsame Schwenkachse für die beiden Verbindungsarme 2, 3 dar. Bei diesem Ausführungsbeispiel sind die Verbindungsarme 2, 3 in einer gemeinsamen Ebene verschwenkbar.

Im Folgenden ist der Verbindungsarm 2 näher beschrieben. Die diesbezüglichen Ausführungen gelten gleichermaßen für den Verbindungsarm 3. Der Verbindungsarm 2 des dargestellten Ausführungsbeispiels ist abgewinkelt, wobei ein erster Schenkel 6 einen Gelenkfortsatz 7 trägt, in den der Verbindungsarm 2 mittels einer Schraube 8 gegenüber dem komplementären Gelenkfortsatz des Verbindungsarms 3 einrichtbar und festlegbar angeschlossen ist. Angeformt an den Schenkel 6 und gegenüber diesem abgewinkelt bildet der weitere Schenkel eine Anschlussplatte 9. Der durch den Schenkel 6 und die Anschlussplatte 9 eingeschlossene Winkel beträgt bei dem dargestellten Ausführungsbeispiel beispielhaft 135°. Neben dieser Abwinklung gegenüber dem Schenkel 6 ist die Anschlussplatte 9 bei dem dargestellten Ausführungsbeispiel auch gegenüber der Ebene E₂ geneigt, und zwar bei dem dargestellten Ausführungsbeispiel um 45°. Aus diesem Grunde ist in Figur 1 an dem Verbindungsarm 2 auch die Seitenfläche der Anschlussplatte 9 sichtbar. Die Anschlussplatte 9 trägt zwei Anschlussglieder, die zum Eingreifen in eine nach Art eines Kederkanals hinterschnittene Montagenut eines daran anzuschließenden Profils ausgebildet sind. Bei dem dargestellten Ausführungsbeispiel trägt die Anschlussplatte 9 zwei rechtwinklig hiervon abragende Riegel 10, 10.1. Die Riegel 10, 10.1 sind im Querschnitt rechteckförmig ausgeführt und in einer fluchtenden Anordnung sowie mit Abstand zueinander angeordnet. Die Riegel 10, 10.1 sind ausgeführt, um in die der Längserstreckung der Montagenut folgende Nutöffnung einzupassen. In die Anschlussplatte 9 ist eine Bohrung eingebracht, durch die der Schaft 11 eines Profilnutanschlussverbinders 12 hindurch greift. Der Schaft 11 ist mit einem Außengewinde ausgestattet. Auf dieses ist eine Mutter 13 zum Halten des Profilnutanschlussverbinders 12 an der Anschlussplatte 9 aufgeschraubt. Der Profilnutanschlussverbinder 12 ist nach Art einer Verkröpfung S-förmig ausgeführt, und zwar dergestalt, dass der gegenüber dem Schaft 11 verkröpfte Teil 14 halbseitig in die hinterschnittene Montagenut eines Profils eingreifen kann. Die Materialstärke des Profilnutanschlussverbinders 12 ist um ein notwendiges Spiel zum Einsetzen desselben in die Montagenut geringer als die lichte Weite der Nutöffnung. Gleiches gilt für die Riegel 10, 10.1.

Der in den Hinterschnitt eingreifende Teil 14 des Profilnutanschlussverbinders 12 weist eine größere Längserstreckung auf als der daran angeformte verkröpfte Abschnitt. Dabei ist die Längserstreckung des Teils 14 größer als der Abstand der Riegel 10, 10.1 voneinander mit der Folge, dass sich das Teil 14, wenn in seiner in die Montagenut eines Profils eingreifenden Stellung befindlich, an den Riegeln 10, 10.1 abstützt.

Insgesamt dient die Anschlussplatte 9 mit ihren Riegeln 10, 10.1 und dem Profilnutanschlussverbinder 12 als Anschlussmittel zum Anschließen des Verbindungsarms 2 an ein eine hinterschnittene Montagenut aufweisendes Profil. Ausgebildet ist dieses Anschlussmittel bzw. der Profilnutanschlussverbinder 12 mit den übrigen zu dem Anschlussmittel beschriebenen Elementen wie dieses in DE 20 2009 002 005 U1 ausführlich beschrieben ist. Somit stellen sich die aus DE 20 2009 002 005 U1 bekannten Vorteile zum Anschließen des darin beschriebenen Profilnutanschlussverbinders ebenfalls bei dem Anschlussmittel des Verbindungsarms 2 ein. Dieses erlaubt somit ein Einbringen des Profilnutanschlussverbinders 12 in die Nutöffnung einer hinterschnittenen Montagenut durch die der Längserstreckung des Profils folgende Nutöffnung hindurch. Es ist somit nicht erforderlich, dass der Profilnutanschlussverbinder 12 in die offene Stirnseite der Montagenut eines solchen Profils eingeführt werden muss. Durch die vorbeschriebene Abstützung des Teils 14 des Profilnutanschlussverbinders an den Riegeln 10, 10.1 ist ein Herausschwenken desselben aus der Montagenut wirksam verhindert, wenn sich der Profilnutanschlussverbinder 12 in seiner in die Montagenut eines Profils eingreifenden Stellung befindet.

In der in Figur 1 gezeigten Ebene E₁ ist der dritte Verbindungsarm 4 verschwenkbar und hinsichtlich seiner Winkelstellung zu den beiden anderen Verbindungsarmen 2, 3 festlegbar. Somit ist der Verbindungsarm 4 in einer Ebene rechtwinklig zur Ebene der Verschwenkbarkeit der Verbindungsarme 2, 3 verschwenkbar. Der Verbindungsarm 4 ist mittels eines Verbindungsstückes 15 an die Anordnung, bestehend aus den beiden Verbindungsarmen 2, 3 und der Schraube 8 angeschlossen. Das Verbindungsstück 15 trägt, wie aus Figur 2 erkennbar, an seinem einen Ende eine Öse 16 mit einem Innengewinde, die als Mutter dient und in die der Gewindeschaft der Schraube 8 eingreift. Somit werden durch Spannen der Schraube 8 die drei Verbindungsarme 2, 3, 4 gegeneinander festgelegt. Durch diese Maßnahme ist prinzipiell auch eine Verschwenkbarkeit des Verbindungsarmes 4 gegenüber den Verbindungsarmen 2, 3 in der Ebene E₂ bzw. einer hierzu parallelen Ebene möglich. Es versteht sich, dass unabhängig von der diesbezüglichen Stellung des Verbindungsstückes 15 der Verbindungsarm 4 in jedem Fall rechtwinklig zur Ebene der Verschwenkbarkeit der Verbindungsarme 2, 3 verschwenkt werden kann.

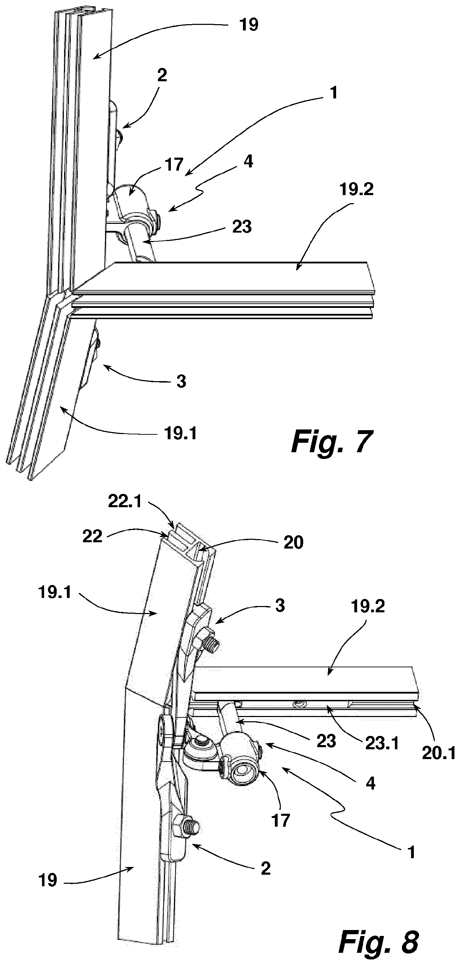

Bei dem dargestellten Ausführungsbeispiel ist der Verbindungsarm 4 bzw. der in Figur 1 dargestellte Teil als Hülse 17 ausgeführt. Die Hülse 17 dient zur Aufnahme eines in Figur 1 nicht dargestellten Verlängerungsstückes. Dieses trägt an seinem einen Ende einen Verbinder als Anschlussmittel, der formschlüssig in die Montagenut eines weiteren Profils eingreift, wie dieses in Figur 8 erkennbar ist. Bezüglich der Hülse 17 ist ein solches, als Stange ausgeführtes Verlängerungsstück hinsichtlich seines Abstandes zur Hülse 17 und dem in die Montagenut einzugreifenden Verbinder einrichtbar. Zum Festlegen des Verlängerungsstückes in der Hülse 17 dienen Klemmschrauben 18, von denen in Figur 1 eine erkennbar ist. Eine weitere befindet sich auf der in Figur 1 nicht erkennbaren gegenüberliegenden Seite der Hülse 17, die allerdings in der Darstellung der Figur 2 erkennbar ist. Die Klemmschrauben 18 durchgreifen mit ihrem Gewindeschaft die Wand der Hülse 17 und wirken mit ihrem Fuße, wenn gespannt, auf ein in der Hülse 17 befindliches Verlängerungsstück.

Wie aus Figur 1 erkennbar fluchtet in der Anordnung der Verbindungsarme 2, 3, 4 die Längsachse der Hülse 17 mit der Ebene E₁.

Aus der Darstellung der Rückansicht des Profilverbinders 1 der Figur 1 in Figur 2 ist nochmals die Neigung der Anschlussplatten 9 gegenüber der Ebene E₂ deutlich.

Figur 3 verdeutlicht die Ausbildung der Anschlussmittel der Verbindungsarme 2, 3 und insbesondere die Verkröpfung der Profilnutanschlussverbinder 12 sowie deren Anordnung zu den Riegeln 10, 10.1.

Die Neigung der Anschlussplatten 9 des Verbindungsarmes 2 ist auch der Seitenansicht der Figur 4 entnehmbar.

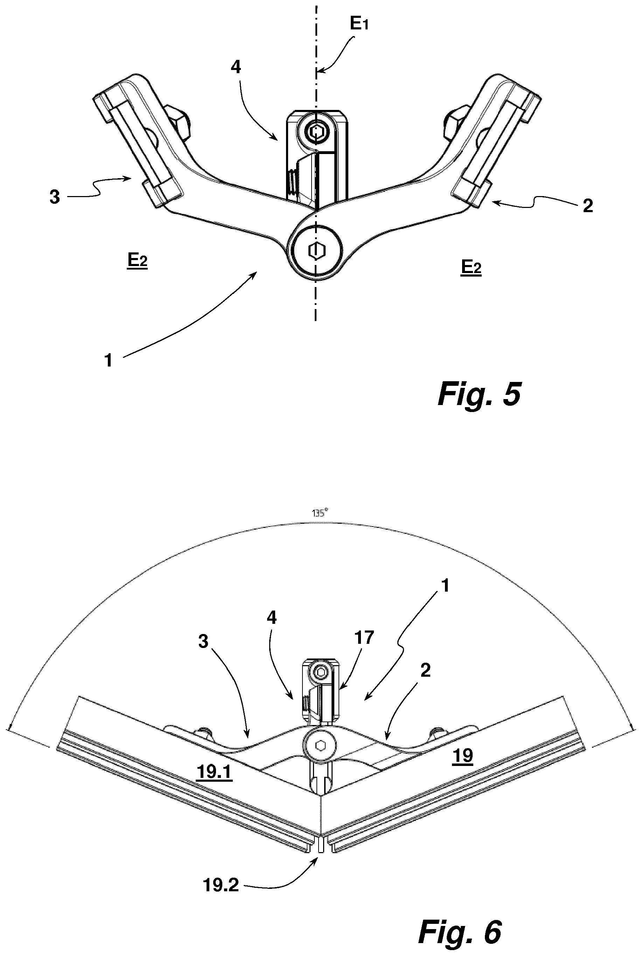

Figur 5 zeigt in einer Draufsicht entsprechend derjenigen der Figur 1 den Profilverbinder 1 mit seinen Verbindungsarmen 2, 3, 4 in einer anderen zueinander eingerichteten Stellung. In der in Figur 5 gezeigten Stellung der Verbindungsarme 2, 3 sind diese gegenüber ihrer Stellung in Figur 1 um etwas mehr als 90° voneinander wegbewegend verschwenkt worden. Dabei ist der Verbindungsarm 2 gegen und der Verbindungsarm 3 im Uhrzeigersinn ausgehend von der in Figur 1 gezeigten Stellung verstellt worden. Zudem ist die Hülse 17 in der Ebene E₁ ausgehend von ihrer Stellung in Figur 1 gezeigt nach unten verschwenkt worden.

Die Verschwenkbarkeit der Verbindungsarme 2, 3, 4 gegeneinander ist bei dem dargestellten Ausführungsbeispiel stufenlos möglich. Die in den Figuren gezeigten Stellungen der Verbindungsarme 2, 3 und 4 zueinander sind lediglich beispielhaft. Nach Einrichten der gewünschten Winkel zueinander, die sodann diejenigen Winkel definieren, mit denen die an die Anschlussmittel angeschlossenen Profile stirnseitig aneinander grenzen, wird die Schraube 8, durch die eine Festlegung aller drei Verbindungsarme 2, 3, 4 zueinander erfolgt, gespannt worden.

Figur 6 zeigt den Profilverbinder 1 mit an seinen Verbindungsarmen 2, 3, 4 angeschlossenen Profilen 19, 19.1, 19.2. Die Profile 19, 19.1, 19.2 sind bezüglich ihrer Querschnittsgeometrie bei dem dargestellten Ausführungsbeispiel identisch und verfügen an ihrer Anschlussseite an den Profilverbinder 1 über eine nach Art eines Kederkanals hinterschnittene Montagenut. Die Querschnittsfläche einer solchen Montagenut ist an dem Profil 19.1, das an den Verbindungsarm 3 angeschlossen ist, erkennbar. Diese Montagenut ist in Figur 8 mit dem Bezugszeichen 20 kenntlich gemacht. Die Hinterschneidung der Montagenut 20 gegenüber ihrer der Längserstreckung der Montagenut 20 folgenden Nutöffnung 21 ist in Bezug auf die Mittellängsebene des Profils 19.1 symmetrisch ausgebildet. Aus der Darstellung der Anordnung aus Figur 6 in Figur 7 wird besser erkennbar, dass mittels des Profilverbinders die drei Profile 19, 19.1, 19.2 zur Ausbildung einer Ecke eines im Übrigen nicht näher dargestellten Körpers dienen. Insofern sind die dargestellten Profile 19, 19.1, 19.2 lediglich Abschnitte längerer Profile. Das Profil 19 trägt an seiner der Montagenut gegenüberliegenden Seite zwei Flachkederkanäle 22, 22.1 mit dem Zweck, dass in diese der Flachkederrand eines Prints eingeschoben und darin festgesetzt werden kann. Die Flachkederkanäle 22, 22.1 sind, mit Ausnahme von möglicherweise vorhandenen Klemmwülsten, nicht hinterschnitten. Auch die Profile 19.1 und 19.2 weisen an ihrer der jeweiligen Montagenut gegenüber liegenden Seite zwei derartige Flachkederkanäle auf.

Das Profil 19.2 ist bei der in den Figuren 6 bis 8 gezeigten Anordnung unter Zwischenschaltung eines bereits zuvor beschriebenen Verlängerungsstückes, welches in diesen Figuren mit dem Bezugszeichen 23 versehen ist, an den Profilverbinder 1 angeschlossen. Festgelegt ist das Verlängerungsstück 23, wie vorbeschrieben, in der Hülse 17. Somit bildet die Hülse 17 und das Verlängerungsstück 23 den Verbindungsarm 4 aus.

Angeformt an den Fuß des Verlängerungsstückes 23 ist, wie aus Figur 8 erkennbar, ein in die Montagenut 20.1 des Profils 19.2 eingeschobener Verbinder 24. Der Verbinder 24 weist eine Querschnittsfläche auf, die im Wesentlichen der Querschnittsfläche der Montagenut 20.1 entspricht. Im Unterschied zu den Profilnutanschlussverbindern 12 der Verbindungsarme 2, 3, die durch die Nutöffnung 21 der Profile 19 bzw. 19.1 in die jeweilige Montagenut 20 eingesetzt werden können, wird der Verbinder 24 mit dem daran angeformten Verlängerungsstück 23 in die stirnseitig offene Montagenut 20.1 eingeschoben. Es versteht sich, dass der Verbinder 24 in die Montagenut 20.1 eingeschoben sein muss, bevor die Stirnseiten durch Anordnen der anderen Profile nicht mehr zugänglich sind. Eine Einrichtung hinsichtlich der effektiven Länge des Verbindungsarmes 4, also dem Abstand zwischen dem Verbinder 23.1 und der Hülse 17, erfolgt durch die Einrichtung des Verlängerungsstückes 23 gegenüber der Hülse 17. Der Verbinder 24 trägt, wie aus Figur 8 erkennbar, eine Gewindebohrung. Diese kann genutzt werden, um den Verbinder 23.1 mittels einer Klemmschraube (nicht dargestellt) in der Montagenut 20.1 des Profils 19.2 festzusetzen.

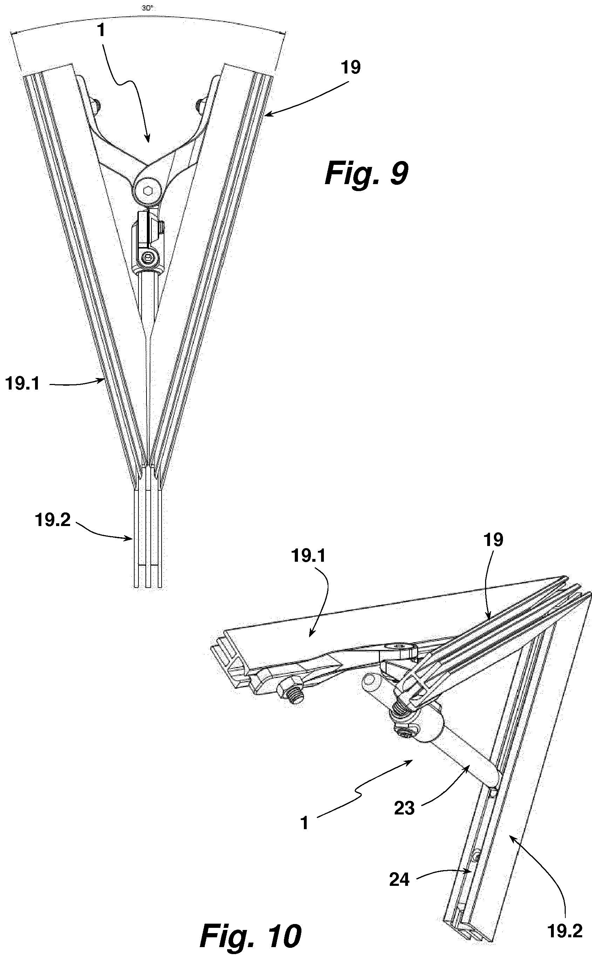

Figur 9 zeigt beispielhaft eine weitere mögliche Eckausgestaltung der drei zu den Figuren 6 bis 8 beschriebenen Profile 19, 19.1, 19.2 mittels des Profilverbinders 1. Im Unterschied zu der Einrichtung der beiden Verbindungsarme 2, 3 bei der Anordnung der Figur 6, bei der die Profile 19, 19.1 einen Winkel von 135° einschließen, ist in der Anordnung der Figur 9 eine Ausrichtung der Profile 19, 19.1 realisiert, bei der diese einen Winkel von nur 30° einschließen. Figur 10 zeigt die Anordnung der Figur 9 in einer anderen perspektivischen Darstellung.

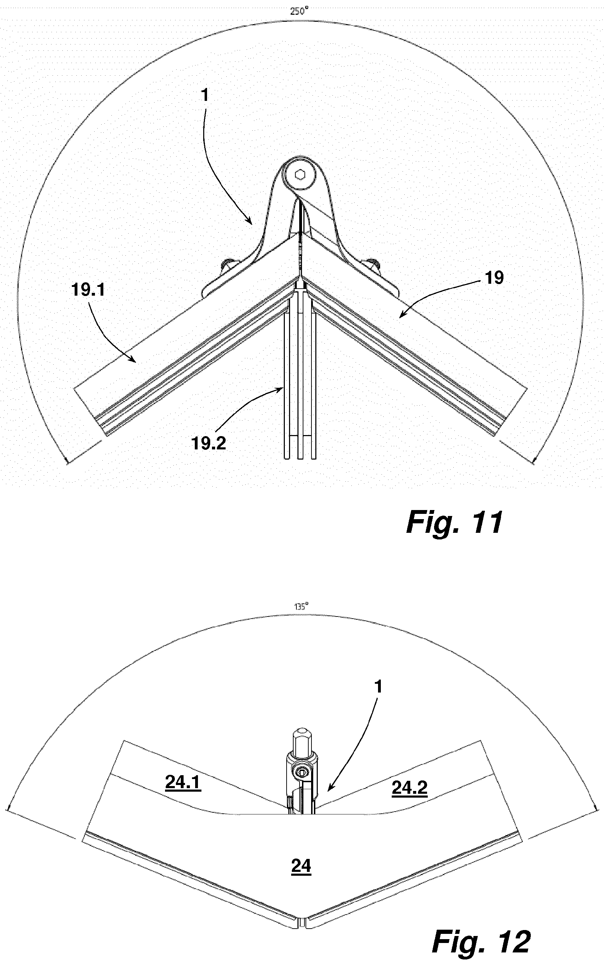

Noch eine weitere beispielhafte Darstellung zur Ausbildung einer Ecke unter Verwendung des Profilverbinders 1 zeigt Figur 11. Der durch die Profile 19, 19.1 gebildete Winkel - hier als Außenwinkel bemaßt, da die Flachkederkanäle innen liegend sind - beträgt beispielhaft 250°.

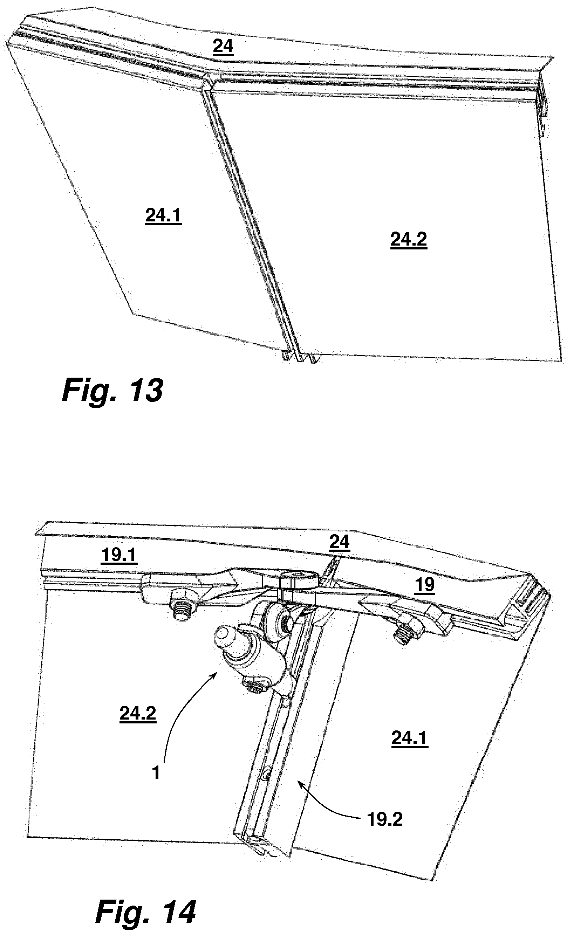

Die Figuren 12, 13 und 14 zeigen perspektivische Ansichten einer Anordnung entsprechend derjenigen der Figur 6, wobei in die Flachkederkanäle 22, 22.1 der einzelnen Profile 19, 19.1, 19.2 jeweils der Flachkederrand eines Prints 24, 24.1, 24.2, beispielsweise ein bedrucktes Textil oder eine bedruckte Kunststoffplane eingesetzt ist. Die Prints 24, 24.1, 24.2 sind in diesen Figuren nur abschnittsweise gezeigt. Während der Print 24 von seiner Außenseite in Figur 12 erkennbar ist, ist aufgrund der gezeigten Perspektive bezüglich der Prints 24.1, 24.2 deren Innenseite sichtbar. Figur 13 zeigt die vorbeschriebene Anordnung in einer anderen perspektivischen Darstellung, in der nunmehr auch die Prints 24.1, 24.2 von ihrer Außenseite her erkennbar sind. Figur 14 zeigt die Anordnung der Figuren 12, 13 von einer Innenansicht in die gebildete Eckausbildung, welche Ansicht die bezüglich der Eckausbildung innen liegende Anordnung des Profilverbinders 1 erkennen lässt.

Die Erfindung ist beispielhaft an möglichen Eckausbildungen unter Verwendung eines Profilverbinders 1 beschrieben worden. Unter Verwendung mehrerer Profilverbinder 1 lassen sich quasi beliebige dreidimensionale Körper nach Art von einzelnen Rahmen ausbilden, die bei Verwendung von Profilen, wie in den Figuren dargestellt, zur Ausbildung der Seitenflächen dieses Körpers mit Prints bestückt werden können.

Das Besondere an dem Profilverbinder 1 ist, dass die Flachkederkanäle 22 bzw. 22.1 zumindest hinsichtlich ihrer Innenwanderstreckung - also in Bezug auf diejenige Nutenwand, die zu dem aufzuspannenden Print weist, aneinander grenzen. Dies ist besonders aus den Figuren 6, 9 oder 11 erkennbar. Diese Anordnung bleibt unabhängig von der Wahl der Winkeleinrichtung der Verbindungsarme 2, 3, 4 zueinander erhalten. Die einzelnen Prints sind somit allein durch die Sichtseite des die beiden Flachkederkanäle 22, 22.1 trennenden Mittelsteges beabstandet.

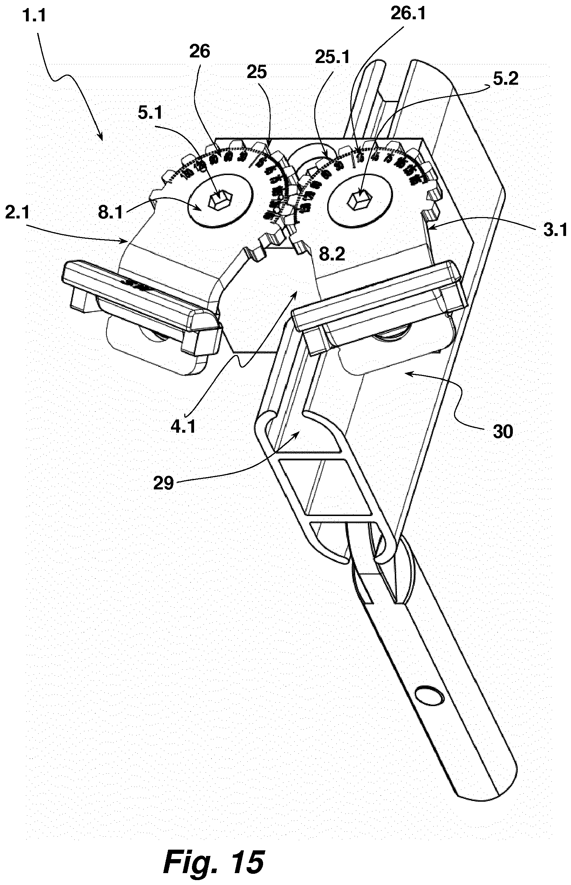

Ein weiterer Profilverbinder 1.1 ist in den Figuren 15 bis 17 beispielhaft dargestellt. Dieser Profilverbinder verfügt ebenfalls über einen ersten Verbindungsarm 2.1 und einen zweiten Verbindungsarm 3.1. Die beiden Verbindungsarme 2.1, 3.1 sind ebenso wie die Verbindungsarme 2, 3 des Profilverbinders 1 gegeneinander verschwenkbar und einrichtbar. Der Profilverbinder 1.1 unterscheidet sich von dem zuvor beschriebenen Profilverbinder 1 unter anderem dadurch, dass die beiden Verbindungsarme 2.1, 3.1 nicht um eine gemeinsame Schwenkachse gegeneinander verschwenkbar sind, sondern jeweils eine eigene Schwenkachse 5.1, 5.2 aufweisen. Die Schwenkachsen 5.1, 5.2 verlaufen parallel zueinander, sodass auch bei diesem Ausführungsbeispiel die Verbindungsarme 2.1, 3.1 in einer gemeinsamen Ebene gegeneinander verschwenkbar sind. Die beiden Schenkachsen 5.1, 5.2 sind voneinander beabstandet, und zwar in der Ebene des weiteren Verbinders 4.1. Zum Festlegen der Verbindungsarme 2.1, 3.1 dient jeweils eine Schraube 8.1, 8.2. Bei dem in diesen Figuren gezeigten Ausführungsbeispiel sind die Verbindungsarme 2.1, 3.1 bezüglich ihrer Schwenkbewegung kinematisch miteinander verbunden, und zwar dadurch, dass jeder Verbindungsarm 2.1, 3.1 eine zu dem anderen Verbindungsarm 3.1 bzw. 2.1 weisenden Zahnkranz 25, 25.1 aufweist. Die Zahnkränze 25, 25.1 greifen ineinander ein. Dem zur Folge verschwenken die beiden Verbindungsarme 2.1, 3.1 gleichermaßen gegeneinander. Eingerichtet ist die durch die ineinander eingreifenden Zahnkränze 25, 25.1 bereitgestellte Verzahnung derart, die Längsachse jedes Verbindungsarmes 2.1, 3.1 der Ebene E₁ einschließt. Diese Ebene E₁ befindet sich mittig zwischen den Schwenkachsen 5.1, 5.2. Benachbart zu den Zahnkränzen 25, 25.1 ist auf jeden Verbindungsarm 2.1 bzw. 3.1 eine Winkelskala 26, 26.1 aufgedruckt oder eingeprägt. Durch diese können bestimmte Winkel, beispielsweise der durch die Verbindungsarme 2.1, 3.1 eingeschlossene Winkel dargestellt werden. Somit ist es mit diesem Profilverbinder 1.1 möglich, ohne zusätzliche Winkelmesswerkzeuge die Verbindungsarme 2.1, 3.1 mit einem bestimmten, von diesen eingeschlossenen Winkel einzurichten, um dann mit diesem vorgegebenen Winkel eine Rahmenkonstruktion mit den darin angeschlossenen Profilen aufzubauen.

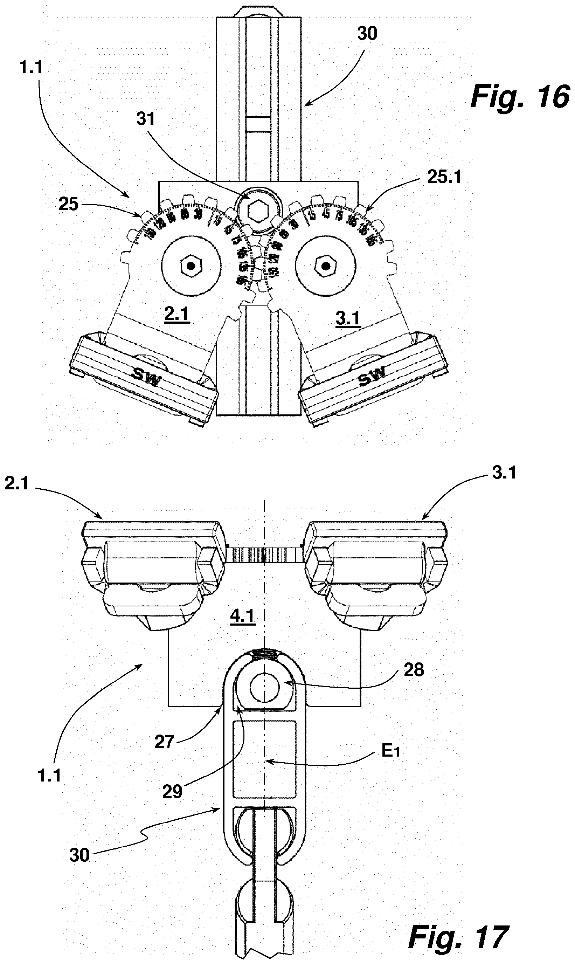

Im Unterschied zu dem Profilverbinder 1 der Figuren 1 bis 14 ist der dritte Verbinder 4.1 nicht als verschwenkbarer und längeneinrichtbarer Verbindungsarm ausgeführt. Dieser Verbinder 4.1 verfügt über eine bei dem dargestellten Ausführungsbeispiel U-förmige Profilaufnahme 27 und einen Montagenutverbinder 28, der prinzipiell dem Verbinder 23.1 des Profilverbinders 1 ähnlich ist. Der Montagenutverbinder 28 greift in die Montagenut 29 eines Profils 30 ein und ist darin mittels einer Schraube 31 festgelegt. In der Draufsicht der Figur 16 auf den Profilverbinder 1.1 ist die Schraube 31 mit ihrem Kopf sichtbar. Von seiner Funktionalität her entspricht der Profilverbinder 1.1 dem Profilverbinder 1 des zuvor beschriebenen Ausführungsbeispiels.

Bezüglich der weiteren Elemente des Profilverbinders 1.1 entspricht dieser dem Profilverbinder 1, sodass die diesbezüglichen Ausführungen auch für den Profilverbinder 1.1 gelten.

In einem nicht dargestellten Ausführungsbeispiel ist vorgesehen, dass ein Profilverbinder entsprechend demjenigen der Figuren 15 bis 17 anstelle des Verbinders 4.1 einen Verbindungsarm 4 trägt, wie dieses zu dem Profilverbinder 1 des Ausführungsbeispiels der Figuren 1 bis 14 beschrieben ist.

### Bezugszeichenliste

- 1, 1.1: Profilverbinder
- 2, 2.1: Verbindungsarm
- 3, 3.1: Verbindungsarm
- 4, 4.1: Verbindungsarm
- 5, 5.1, 5.2: Schwenkachse
- 6: Schenkel
- 7: Gelenkfortsatz
- 8, 8.1, 8.2: Schraube
- 9: Anschlussplatte
- 10, 10.1: Riegel
- 11: Schaft
- 12: Profilnutanschlussverbinder
- 13: Mutter
- 14: Teil
- 15: Verbindungsstück
- 16: Öse
- 17: Hülse
- 18: Klemmschraube
- 19, 19.1, 19.2: Profil
- 20, 20.1: Montagenut
- 21: Nutöffnung
- 22, 22.1: Flachkederkanal
- 23: Verlängerungsstück
- 23.1: Verbinder
- 24, 24.1, 24.2: Print
- 25, 25.1: Zahnkreuz
- 26, 26.1: Winkelskala
- 27: Profilaufnahme
- 28: Montagenutverbinder
- 29: Montagenut
- 30: Profil
- 31: Schraube
- E₁, E₂: Ebene

## Patentansprüche

1. Profilverbinder (1, 1.1) mit einem ersten Verbindungsarm (2), ausgerüstet mit einem Anschlussmittel zum Anschließen des ersten Verbindungsarms (2, 2.1) an ein erstes Profil (19) mit einer seiner Längserstreckung folgenden Montagenut (20), in die das Anschlussmittel des ersten Verbindungsarms (2, 2.1) zum Anschließen desselben an das Profil (19) eingreift, und mit einem zweiten Verbindungsarm (3), ausgerüstet mit einem Anschlussmittel zum Anschließen des zweiten Verbindungsarms (3) an ein zweites Profil (19.1) mit einer seiner Längserstreckung folgenden Montagenut (20.1), in die das Anschlussmittel des zweiten Verbindungsarms (3, 3.1) zum Anschließen desselben an das Profil (19.1) eingreift, welche beiden Verbindungsarme (2, 3, 2.1, 3.1) in einer Ebene (E₂) schwenkbar und zueinander einrichtbar sind, wobei der Profilverbinder (1, 1.1) einen weiteren Verbinder (4, 4.1) aufweist, der in derjenigen Ebene (E₁) zwischen dem ersten und zweiten Verbindungsarm (2, 3) angeordnet ist, die entweder rechtwinklig zur Ebene (E₂) der Verschwenkbarkeit des ersten und zweiten Verbindungsarms (2, 3, 2.1, 3.1) oder als Winkelhalbierende der geneigten Ebenen der Verschwenkbarkeit des ersten und zweiten Verbindungsarms (2, 3, 2.1, 3.1) liegt, welcher weitere Verbinder (4, 4.1) ein Anschlussmittel zum Anschließen dieses Verbinders (4, 4.1) an ein drittes Profil (19.2, 30) mit einer seiner Längserstreckung folgenden Montagenut (29), in die das Anschlussmittel eingreift, aufweist, **dadurch gekennzeichnet, dass** die Anschlussmittel des ersten und zweiten Verbindungsarms (2, 3, 2.1, 3.1) eine zur Anlage an der Außenseite des jeweiligen Profils (19, 19.1) gelangende Anschlussplatte (9) umfassen, von der zumindest ein zum Eingreifen in die Montagenut (20, 20.1) vorgesehenes Anschlussglied zum formschlüssigen Anschließen des Profils (19, 19.1) an den jeweiligen Verbindungsarm (2, 3, 2.1, 3.1) abragend angeordnet ist, und dass die Ebene der Anschlussplatte (9) gegenüber der Schwenkebene (E₂) des ersten und zweiten Verbindungsarmes (2, 3, 2.1, 3.1) geneigt ist, wobei die Anschlussplatten (9) gegensinnig zueinander geneigt sind.

2. Profilverbinder nach Anspruch 1, **dadurch gekennzeichnet, dass** der weitere Verbinder ein weiterer Verbindungsarm (4) ist, der gegenüber dem ersten und zweiten Verbindungsarm (2, 3) schwenkbar und in seiner diesbezüglichen Stellung einrichtbar ist und dass dieser Verbindungsarm (4) hinsichtlich seiner effektiven Länge, mit der dieser an das dritte Profil (19.2) anschließbar ist, ebenfalls einrichtbar ist.

3. Profilverbinder nach Anspruch 2, **dadurch gekennzeichnet, dass** der weitere Verbindungsarm (4) eine Hülse (17), deren Längsachse in der Ebene (E₁) der Verschwenkbarkeit dieses Verbindungsarms (4) liegt, sowie ein in der Hülse (17) hinsichtlich seiner effektiven Länge festlegbares Verlängerungsstück (23) umfasst, das an seinem einen Ende ein Anschlussmittel zum Anschließen dieses Verbindungsarmes (4) an ein drittes, eine Montagenut aufweisendes Profil (19.2) trägt, wobei das Anschlussmittel zum Anschließen desselben an das Profil (19.2) zum Eingreifen in die Montagenut ausgelegt ist.

4. Profilverbinder nach Anspruch 3, **dadurch gekennzeichnet, dass** das Verlängerungsstück (23) in der Hülse (17) mit einer den Mantel der Hülse (17) durchgreifenden Schraube (18) festlegbar ist.

5. Profilverbinder nach einem der Ansprüche 1 bis 4, **dadurch gekennzeichnet, dass** der erste Verbindungsarm (2) und der zweite Verbindungsarm (3) eine gemeinsame Schwenkachse aufweisen.

6. Profilverbinder nach einem der Ansprüche 1 bis 4, **dadurch gekennzeichnet, dass** die Schwenkachsen (5.1, 5.2) des ersten Verbindungsarms (2.1) und der zweiten Verbindungsarms (3.1) voneinander beabstandet sind und sich die Ebene (E₁) zwischen den Schwenkachsen (5.1, 5.2) dieser beiden Verbindungsarme (2.1, 3.1) befindet.

7. Profilverbinder nach Anspruch 6, **dadurch gekennzeichnet, dass** der erste Verbindungsarm (2.1) mit dem zweiten Verbindungsarm (3.1) bezüglich einer Schwenkbarkeit durch eine ineinander eingreifende Zahnung (25, 25.1) aneinander gekoppelt sind.

8. Profilverbinder nach einem der Ansprüche 1 bis 7, **dadurch gekennzeichnet, dass** die Anschlussplatten (9) gegensinnig zueinander geneigt sind.

9. Anordnung, umfassend einen Profilverbinder nach einem der Ansprüche 1 bis 8 sowie an den Profilverbinder (1, 1.1) angeschlossene Profile (19, 19.1), welche Profile (19, 19.1) eine ihrer Längserstreckung folgende Montagenut (20, 20.1) aufweisen, in die zum Anschließen des Profilverbinders (1, 1.1) an das jeweilige Profil (19, 19.1) ein Anschlussmittel eingreift, **dadurch gekennzeichnet, dass** die Montagenuten (20, 20.1) der zum Anschließen an den ersten und zweiten Verbindungsarm (2, 3) vorgesehenen Profile (19, 19.1) hinterschnitten sind und jede Anschlussplatte (9) zwei unterschiedliche Anschlussglieder (10, 10.1, 12) trägt, von denen eines durch die Nutöffnung (21) hindurch und in den Hinterschnitt der Montagenut (20, 20.1) eingreift und von denen zumindest ein weiteres in die Nutöffnung (21) hineinragt und als Riegel (10, 10.1) dient, durch das ein Herausbringen des anderen Anschlussgliedes (12) aus seiner in den Hinterschnitt eingreifenden Stellung blockiert ist.

10. Anordnung nach Anspruch 9, **dadurch gekennzeichnet, dass** das in den Hinterschnitt der Montagenut (20, 20.1) eingreifende Anschlussglied (12) lösbar an der Anschlussplatte (9) befestigt ist.

11. Anordnung nach Anspruch 10, **dadurch gekennzeichnet, dass** das in den Hinterschnitt der Montagenut (20, 20.1) eingreifende Anschlussglied (12) nur einseitig in den Hinterschnitt eingreift.

12. Anordnung nach einem der Ansprüche 9 bis 11, **dadurch gekennzeichnet, dass** die an den Profilverbinder (1) anzuschließenden Profile (19, 19.1, 19.2) an ihrer der jeweiligen Montagenut (20, 20.1) gegenüberliegenden Seite wenigstens einen der Längserstreckung des Profils folgenden Flachkederkanal (22, 22.1) aufweisen.

## Claims

1. Profile connector (1, 1.1) having a first connecting arm (2) equipped with an attachment means for attaching the first connecting arm (2, 2.1) to a first profile (19) having a fitting slot (20) which follows the longitudinal extent thereof and in which the attachment means of the first connecting arm (2, 2.1) engages in order to attach the latter to the profile (19), and having a second connecting arm (3) equipped with an attachment means for attaching the second connecting arm (3) to a second profile (19.1) having a fitting slot (20.1) which follows the longitudinal extent thereof and in which the attachment means of the second connecting arm (3, 3.1) engages in order to attach the latter to the profile (19.1), said two connecting arms (2, 3, 2.1, 3.1) being pivotable in a plane (E₂) and settable with respect to one another, wherein the profile connector (1, 1.1) has a further connector (4, 4.1) which is arranged in that plane (E₁) between the first and second connecting arms (2, 3) which is either at right angles to the plane (E₂) of pivotability of the first and second connecting arms (2, 3, 2.1, 3.1) or is an angle bisector of the inclined planes of pivotability of the first and second connecting arms (2, 3, 2.1, 3.1), said further connector (4, 4.1) having an attachment means for attaching this connector (4, 4.1) to a third profile (19.2, 30) having a fitting slot (29) which follows the longitudinal extent thereof and in which the attachment means engages, **characterized in that** the attachment means of the first and second connecting arms (2, 3, 2.1, 3.1) comprise an attachment plate (9) which comes into abutment against the outer side of the respective profile (19, 19.1) and from which at least one attachment member, intended for engaging in the fitting slot (20, 20.1), for attaching the profile (19, 19.1) to the respective connecting arm (2, 3, 2.1, 3.1) in a form-fitting manner projects, and **in that** the plane of the attachment plate (9) is inclined with respect to the pivot plane (E₂) of the first and second connecting arms (2, 3, 2.1, 3.1), wherein the attachment plates (9) are inclined in opposite directions to one another.

2. Profile connector according to Claim 1, **characterized in that** the further connector is a further connecting arm (4) which is pivotable with respect to the first and second connecting arms (2, 3) and is settable in its position in this regard, and **in that** this connecting arm (4) is likewise settable with regard to its effective length with which it is attachable to the third profile (19.2).

3. Profile connector according to Claim 2, **characterized in that** the further connecting arm (4) comprises a sleeve (17), the longitudinal axis of which is located in the plane (E₁) of pivotability of this connecting arm (4), and an extension piece (23) that is fixable in the sleeve (17) with regard to its effective length, said extension piece (23) bearing at its one end an attachment means for attaching this connecting arm (4) to a third profile (19.2) having a fitting slot, wherein the attachment means for attaching same to the profile (19.2) is designed to engage in the fitting slot.

4. Profile connector according to Claim 3, **characterized in that** the extension piece (23) is fixable in the sleeve (17) by way of a screw (18) that engages through the casing of the sleeve (17).

5. Profile connector according to one of Claims 1 to 4, **characterized in that** the first connecting arm (2) and the second connecting arm (3) have a common pivot axis.

6. Profile connector according to one of Claims 1 to 4, **characterized in that** the pivot axes (5.1, 5.2) of the first connecting arm (2.1) and of the second connecting arm (3.1) are spaced apart from one another and the plane (E₁) is located between the pivot axes (5.1, 5.2) of these two connecting arms (2.1, 3.1).

7. Profile connector according to Claim 6, **characterized in that** the first connecting arm (2.1) is coupled to the second connecting arm (3.1) with regard to pivotability by toothings (25, 25.1) that engage in one another.

8. Profile connector according to one of Claims 1 to 7, **characterized in that** the attachment plates (9) are inclined in opposite directions to one another.

9. Arrangement comprising a profile connector according to one of Claims 1 to 8 and profiles (19, 19.1) attached to the profile connector (1, 1.1), said profiles (19, 19.1) having a fitting slot (20, 20.1) which follows the longitudinal extent thereof and in which an attachment means engages in order to attach the profile connector (1, 1.1) to the respective profile (19, 19.1), **characterized in that** the fitting slots (20, 20.1) of the profiles (19, 19.1) provided for attaching to the first and second connecting arms (2, 3) are undercut and each attachment plate (9) bears two different attachment members (10, 10.1, 12), one of which passes through the slot opening (21) and engages behind the undercut of the fitting slot (20, 20.1) and at least one other of which projects into the slot opening (21) and serves as a lock (10, 10.1) which blocks any removal of the other attachment member (12) from its position engaging behind the undercut.

10. Arrangement according to Claim 9, **characterized in that** the attachment member (12) engaging behind the undercut of the fitting slot (20, 20.1) is fastened releasably to the attachment plate (9).

11. Arrangement according to Claim 10, **characterized in that** the attachment member (12) engaging behind the undercut of the fitting slot (20, 20.1) engages behind the undercut on only one side.

12. Arrangement according to one of Claims 9 to 11, **characterized in that** the profiles (19, 19.1, 19.2) to be attached to the profile connector (1) have, on their opposite side from the respective fitting slot (20, 20.1), at least one flat beading channel (22, 22.1) which follows the longitudinal extent of the profile.

## Revendications

1. Connecteur de profilés (1, 1.1) avec un premier bras de connexion (2), muni d'un moyen de raccordement pour le raccordement du premier bras de connexion (2, 2.1) à un premier profilé (19) avec une rainure de montage (20) suivant son extension longitudinale, dans laquelle s'engage le moyen de raccordement du premier bras de connexion (2, 2.1) pour le raccordement de celui-ci au profilé (19), et avec un deuxième bras de connexion (3), muni d'un moyen de raccordement pour le raccordement du deuxième bras de connexion (3) à un deuxième profilé (19.1) avec une rainure de montage (20.1) suivant son extension longitudinale, dans laquelle s'engage le moyen de raccordement du deuxième bras de connexion (3, 3.1) pour le raccordement de celui-ci au profilé (19.1), lesquels deux bras de connexion (2, 3, 2.1, 3.1) peuvent pivoter et s'agencer l'un à l'autre dans un plan (E₂), dans lequel le connecteur de profilés (1, 1.1) présente un autre connecteur (4, 4.1), qui est disposé entre le premier et le deuxième bras de connexion (2, 3) dans le plan (E₁), qui est placé soit perpendiculairement au plan (E₂) du pivotement du premier et du deuxième bras de connexion (2, 3, 2.1, 3.1) soit comme plan bissecteur des plans inclinés du pivotement du premier et du deuxième bras de connexion (2, 3, 2.1, 3.1), lequel autre connecteur (4, 4.1) présente un moyen de raccordement pour le raccordement de ce connecteur (4, 4.1) à un troisième profilé (19.2, 30) avec une rainure de montage (29) suivant son extension longitudinale, dans laquelle s'engage le moyen de raccordement, **caractérisé en ce que** les moyens de raccordement du premier et du deuxième bras de connexion (2, 3, 2.1, 3.1) comprennent une plaque de raccordement (9) venant s'appliquer sur le côté extérieur du profilé respectif (19, 19.1), de laquelle au moins un élément de raccordement prévu pour s'engager dans la rainure de montage (20, 20.1) est disposé en saillie en vue du raccordement par emboîtement du profilé (19, 19.1) au bras de connexion respectif (2, 3, 2.1, 3.1), et **en ce que** le plan de la plaque de raccordement (9) est incliné par rapport au plan de pivotement (E₂) du premier et du deuxième bras de connexion (2, 3, 2.1, 3.1), dans lequel les plaques de raccordement (9) sont inclinées en sens contraire l'une par rapport à l'autre.

2. Connecteur de profilés selon la revendication 1, **caractérisé en ce que** l'autre connecteur est un autre bras de connexion (4), qui peut pivoter par rapport au premier et au deuxième bras de connexion (2, 3) et qui peut s'agencer dans sa position par rapport à ceux-ci et **en ce que** ce bras de connexion (4) peut également s'agencer, en ce qui concerne sa longueur effective avec laquelle celui-ci peut être raccordé au troisième profilé (19.2).

3. Connecteur de profilés selon la revendication 2, **caractérisé en ce que** l'autre bras de connexion (4) comprend une douille (17), dont l'axe longitudinal est situé dans le plan (E₁) du pivotement de ce bras de connexion (4), ainsi qu'une pièce de prolongement (23) à fixer dans la douille (17) en ce qui concerne sa longueur effective, qui porte à sa première extrémité un moyen de raccordement pour le raccordement de ce bras de connexion (4) à un troisième profilé (19.2) présentant une rainure de montage, dans lequel le moyen de raccordement pour le raccordement de celui-ci au profilé (19.2) est conçu pour s'engager dans la rainure de montage.

4. Connecteur de profilés selon la revendication 3, **caractérisé en ce que** la pièce de prolongement (23) peut être fixée dans la douille (17) avec une vis (18) traversant la paroi latérale de la douille (17).

5. Connecteur de profilés selon l'une quelconque des revendications 1 à 4, **caractérisé en ce que** le premier bras de connexion (2) et le deuxième bras de connexion (3) présentent un axe de pivotement commun.

6. Connecteur de profilés selon l'une quelconque des revendications 1 à 4, **caractérisé en ce que** les axes de pivotement (5.1, 5.2) du premier bras de connexion (2.1) et du deuxième bras de connexion (3.1) sont espacés l'un de l'autre et le plan (E₁) se trouve entre les axes de pivotement (5.1, 5.2) de ces deux bras de connexion (2.1, 3.1).

7. Connecteur de profilés selon la revendication 6, **caractérisé en ce que** le premier bras de connexion (2.1) est couplé au deuxième bras de connexion (3.1) en ce qui concerne leur pivotement par une denture (25, 25.1) s'engageant l'une dans l'autre.

8. Connecteur de profilés selon l'une quelconque des revendications 1 à 7, **caractérisé en ce que** les plaques de raccordement (9) sont inclinées en sens contraire l'une par rapport à l'autre.

9. Arrangement, comprenant un connecteur de profilés selon l'une quelconque des revendications 1 à 8 ainsi que des profilés (19, 19.1) raccordés au connecteur de profilés (1, 1.1), lesquels profilés (19, 19.1) présentent une rainure de montage (20, 20.1) suivant leur extension longitudinale, dans laquelle s'engage un moyen de raccordement pour le raccordement du connecteur de profilés (1, 1.1) au profilé respectif (19, 19.1), **caractérisé en ce que** les rainures de montage (20, 20.1) des profilés (19, 19.1) prévus pour le raccordement au premier et au deuxième bras de connexion (2, 3) sont en contre-dépouille et chaque plaque de raccordement (9) porte deux éléments de raccordement différents (10, 10.1, 12), dont l'un s'engage à travers l'ouverture de rainure (21) et dans la contre-dépouille de la rainure de montage (20, 20.1) et dont au moins un autre pénètre dans l'ouverture de rainure (21) et sert de verrou (10, 10.1), par lequel une extraction de l'autre élément de raccordement (12) hors de sa position d'engagement dans la contre-dépouille est bloquée.

10. Arrangement selon la revendication 9, **caractérisé en ce que** l'élément de raccordement (12) s'engageant dans la contre-dépouille de la rainure de montage (20, 20.1) est fixé de façon séparable à la plaque de raccordement (9).

11. Arrangement selon la revendication 10, **caractérisé en ce que** l'élément de raccordement (12) s'engageant dans la contre-dépouille de la rainure de montage (20, 20.1) ne s'engage que d'un seul côté dans la contre-dépouille.

12. Arrangement selon l'une quelconque des revendications 9 à 11, **caractérisé en ce que** les profilés (19, 19.1, 19.2) à raccorder au connecteur de profilés (1) présentent sur leur côté opposé à la rainure de montage respective (20, 20.1) au moins un canal de bourrelet plat (22, 22.1) suivant l'extension longitudinale du profilé.
